# EUROPEAN PATENT APPLICATION

(11) **EP 4 703 130 A1**
(43) Date of publication of application: **04.03.2026**
(21) Application number: 24198207.3
(22) Date of filing: 03.09.2024
(51) Int. Cl.: B29D 11/00

(54) **METHOD FOR MANUFACTURING A SPECTACLE LENS**

(71) Applicant: Carl Zeiss Vision International GmbH, 73430 Aalen (DE)
(72) Inventor: Sharifi, Hamed, 73430 Aalen (DE); Karim, Waiz, 73430 Aalen (DE); Schmid, Silvia, 73430 Aalen (DE)
(74) Representative: Carl Zeiss AG - Patentabteilung

(57) **Abstract**

The application relates to a method for manufacturing a spectacle lens, the method comprising the step of:
- curing a coating material on a surface of a spectacle lens using optical radiation emitted by an intense light source, said coating material resulting in a coating on said surface of said spectacle lens,
the method is characterized in that
a wavelength range of said optical radiation emitted by said intense light source is limited by at least one of
i) a wavelength at a) an intersection point of an emission spectrum of said intense light source and an absorptance spectrum of the spectacle lens and b) a maximum wavelength of optical radiation emitted by said intense light source,
ii) a wavelength larger than a wavelength at a) an intersection point of an emission spectrum of said intense light source and an absorptance spectrum of the spectacle lens and b) a maximum wavelength of optical radiation emitted by said intense light source,
iii) a wavelength smaller than a wavelength at a) an intersection point of an emission spectrum of said intense light source and an absorptance spectrum of the spectacle lens and b) a maximum wavelength of optical radiation emitted by said intense light source.

## Description

### Field of the invention

The present invention relates to a method for manufacturing a spectacle lens according to the preamble of claim 1 and a method implemented by a processor and being configured for generating curing process parameters according to the preamble of claim 11.

### Related prior art

WO 00/56527 A1 discloses using a flash lamp emitting activating light pulses such as a xenon light source to cure a coating composition on a spectacle lens.

EP 4 171 932 A1 discloses using single electromagnetic pulses to efficiently cure a coating precursor material on a surface of a spectacle lens such that a mechanical, optical, or functional property of a coated spectacle lens is adjusted within a total process duration of 1 ms to 3 min, i.e., within a significantly reduced curing time in comparison with a conventional oven curing process.

### Problem to be solved

Departing from WO 00/56527 A1, page 75, lines 26 to 29, suggesting applying activating light with an intensity of 150 to 300 mW/cm² at a wavelength range of about 360 to 370 nm and about 50 to 150 mW/cm² at a wavelength range of about 250 to 260 nm for curing a liquid scratch resistant coating composition to a solid the problem to be solved by the present invention has been to apply activating light with an increased intensity for curing a liquid coating composition to a solid.

### Summary of the invention

The problem has been solved by the method for manufacturing a spectacle lens according to claim 1 and the method implemented by a processor and being configured for generating curing process parameters according to claim 11.

The method for manufacturing a spectacle lens comprises the step of:
- curing, within a curing time ranging from 1 ms to 3 min, a coating material on a surface of a spectacle lens using optical radiation emitted by an intense light source, said coating material resulting in a coating on said surface of said spectacle lens,

the method being characterized in excluding a wavelength range of said optical radiation emitted by said intense light source, the excluded wavelength range being one wavelength range selected from:
   i) a wavelength range of from a) a wavelength at an intersection point of an emission spectrum of said intense light source and an absorptance spectrum of the spectacle lens to b) a minimum wavelength of said optical radiation emitted by said intense light source,
   ii) a wavelength range of from a) a wavelength having a value that is 1% to 35% larger than a wavelength at an intersection point of an emission spectrum of said intense light source and an absorptance spectrum of the spectacle lens to b) a minimum wavelength of said optical radiation emitted by said intense light source,
   iii) a wavelength range of from a) a wavelength having a value that is 1% to 25% smaller than a wavelength at an intersection point of an emission spectrum of said intense light source and an absorptance spectrum of the spectacle lens to b) a minimum wavelength of said optical radiation emitted by said intense light source.
for i) to iii) the emission spectrum of the intense light source is normalized to a maximum value of the emission spectrum and the absorptance spectrum of the spectacle lens is a spectrum of an absorptance of the spectacle lens as a function of wavelengths.

In other words, the method for manufacturing the spectacle lens comprises the step of:
- curing, within the curing time ranging from 1 ms to 3 min, the coating material on the surface of the spectacle lens using optical radiation emitted by the intense light source, said coating material resulting in the coating on said surface of said spectacle lens,

is characterized in that the wavelength range of said optical radiation emitted by said intense light source is selected from one of the following wavelength ranges i) or ii) or iii):
   i) a wavelength range between the wavelength at a) the intersection point of the emission spectrum of said intense light source and the absorptance spectrum of the spectacle lens and b) a maximum wavelength of optical radiation emitted by said intense light source,
   ii) a wavelength range between the wavelength that has the value that is 1% to 35% larger than the wavelength at a) the intersection point of the emission spectrum of said intense light source and the absorptance spectrum of the spectacle lens and b) a maximum wavelength of optical radiation emitted by said intense light source,
   iii) a wavelength range between the wavelength that has the value that is 1% to 25% smaller than the wavelength at a) the intersection point of the emission spectrum of said intense light source and the absorptance spectrum of the spectacle lens and b) a maximum wavelength of optical radiation emitted by said intense light source,
for i) to iii) the emission spectrum of the intense light source is normalized to the maximum value of the emission spectrum and the absorptance spectrum of the spectacle lens is a spectrum of an absorptance of the spectacle lens as a function of wavelengths.

"Curing" is as defined in ISO 4618:2023(E), entry 3.71, a process by which a coating material changes from its original state to a stable solid coating (3.46). Curing, within a curing time ranging from 1 ms to 3 min, a coating material on a surface of a spectacle lens using optical radiation emitted by an intense light source, said coating material resulting in a coating on said surface of said spectacle lens, or photonically curing, within the curing time ranging from 1 ms to 3 min, the coating material on the surface of the spectacle lens using optical radiation emitted by the intense light source, said coating material resulting in the coating on said surface of said spectacle lens, is assumed to work due to absorption of the optical radiation emitted by said intense light source by at least one of the spectacle lens and the coating material, preferably a) the spectacle lens or b) the spectacle lens comprising the coating material. The absorption defined analogously as in DIN EN ISO 4007:2020-01, section 3.10.1.16, as process by which radiant energy (3.4.8) is converted to a different form of energy, preferably heat, preferably by interaction with the spectacle lens or by interaction with the spectacle lens comprising the coating material. Radiant energy is as defined in DIN EN ISO 4007:2020-01, entry 3.4.8, as time integral of a radiant flux (3.4.7) over a given duration. Radiant flux is as defined in DIN EN ISO 4007:2020-01, entry 3.4.7, as power emitted, transmitted or received in form of radiation. Curing preferably comprises the curing of a single coating material or the curing of a plurality of coating materials.

The "coating material" is defined analogously as in ISO 4818:2023(E), entry 3.48, as product in liquid or paste form, that, when applied to the surface of the spectacle lens, forms a layer possessing protective, decorative and/or other specific properties. Preferably, the coating material is at least one of a primer hard coating material, a hard coating material or a photochromic coating material. The respective coating materials are described in detail for example in EP 4 171 932 A2, page 42, line 25 to page 60, line 34.

The "surface" of the spectacle lens is at least one of a front surface and a back surface of the spectacle lens. The front surface of the spectacle lens is as defined ISO 13666:2019(E), entry 3.2.13, a surface of the spectacle lens (3.5.2) intended to be fitted away from an eye. The back surface of the spectacle lens is as defined in ISO 13666:2019(E), entry 3.2.14, a surface of the spectacle lens (3.5.2) intended to be fitted nearer to an eye.

The "spectacle lens" is as defined in ISO 13666:2019(E), entry 3.5.2, an ophthalmic lens (3.5.1) worn in front of, but not in contact with, an eyeball.

"Optical radiation" is defined as in ISO 13666:2019(E), entry 3.1.1, or as in DIN EN ISO 4007:2020-01, entry 3.2.1, an electromagnetic radiation at wavelengths between a region of transition to X-rays (λ≈1 nm) and a region of transition to radio waves (λ≈1mm). Analogously as in note 1 to entry 3.2.1 of DIN EN ISO 4007:2020-01, the optical radiation is subdivided into the following spectacle ranges, with a possible overlap at a longer wavelength limit of a UV spectrum: ultraviolet radiation (3.2.3); visible radiation (3.2.2); infrared radiation (3.2.4).

The "intense light source" is defined analogously as in ISO 12609-2:2013(E), entry 2.3, as a device incorporating one or more non-laser source(s) of optical radiation of a wavelength range of 250 nm to 3000 nm. Analogously as in note 1 to entry 2.3 of ISO 12609-2:2019(E), the intense light source can operate in continuous or pulsed regime. Preferably, the intense light source is an intense pulsed light source, defined analogously as in DIN EN ISO 4007:2020-01, entry 3.3.19, as compact xenon arc lamp, operated in a pulsed mode.

The "coating" is defined analogously as in ISO 4618:2023(E), entry 3.46, as layer on the surface of the spectacle lens, said layer formed from a single continuous layer of the coating material; or as layers on the surface of the spectacle lens, each layer of said layers formed from a continuous single layer of the coating material. Preferably, the coating is at least one of a hard coating and a photochromic coating, the hard coating as defined in ISO 13666:2019(E), entry 3.18.2, as coating on the surface of an organic spectacle lens (3.5.2) intended to enhance the abrasion resistance of the surface during normal use, the photochromic coating defined analogously as in ISO 13666:2019(E), entry 3.3.5 (photochromic material) as coating that reversibly changes its luminous transmittance (3.17.6) depending upon irradiance and wavelength of the optical radiation (3.1.1) falling upon it.

An "emission spectrum of the intense light source" is a spectrum of the optical radiation emitted by the intense light source as a function of wavelengths. The emission can be normalized to 100% or to a value with a maximum of 1.0. The emission spectrum of the intense light source is normalized to the maximum value of the emission spectrum. For determining the intersection point between the emission spectrum of the intense light source and the absorptance spectrum of the spectacle lens, emission and absorptance preferably are either both expressed as percentage or as a value with a maximum of 1.0.

An "absorptance spectrum of the spectacle lens" is a spectrum of an absorptance of the spectacle lens as a function of wavelengths. The absorptance of the spectacle lens is defined as in ISO 13666:2019(E), entry 3.17.18, as ratio of an absorbed radiant flux or luminous flux to an incident flux under specified conditions. Analogously as in note 2 to entry 3.10.1.15 of DIN EN ISO 4007:2020-01, the absorptance of the spectacle lens equals 1 minus a sum of transmittance of the spectacle lens and reflectance of the spectacle lens. Analogously as in note 4 to entry 3.10.1.15 of DIN EN ISO 4007:2020-01, absorptance can be expressed as a percentage or as a value with a maximum of 1.0. Alternatively, and preferably in case of coatings known for their high absorptance compared to the absorptance of the spectacle lens, such as photochromic coatings, the absorptance spectrum of the spectacle lens is a spectrum of an absorptance of the spectacle lens coated with the coating as a function of wavelength. In this alternative, preferably the coating material had been cured in an alternative manner, for example, the coating material had been cured by a conventional oven curing process. The absorptance of the spectacle lens coated with the coating is defined as in ISO 13666:2019(E), entry 3.17.18, as ratio of an absorbed radiant flux or luminous flux to an incident flux under specified conditions. Analogously as in note 2 to entry 3.10.1.15 of DIN EN ISO 4007:2020-01, the absorptance of the spectacle lens coated with the coating equals 1 minus a sum of transmittance of the spectacle lens coated with the coating and reflectance of the spectacle lens coated with the coating. Analogously as in note 4 to entry 3.10.1.15 of DIN EN ISO 4007:2020-01, absorptance of the spectacle lens coated with the coating can be expressed as a percentage or as a value with a maximum of 1.0.

Further alternatively, the absorptance spectrum of the spectacle lens may be a spectrum of an absorptance of the spectacle lens coated with the coating material as a function of wavelengths. The absorptance of the spectacle lens coated with the coating material is defined analogously as in ISO 13666:2019(E), entry 3.17.18, as ratio of an absorbed radiant flux or luminous flux to an incident flux under specified conditions. Analogously as in note 2 to entry 3.10.1.15 of DIN EN ISO 4007:2020-01, the absorptance of the spectacle lens coated with the coating material equals 1 minus a sum of transmittance of the spectacle lens coated with the coating material and reflectance of the spectacle lens coated with the coating material. Analogously as in note 4 to entry 3.10.1.15 of DIN EN ISO 4007:2020-01, absorptance of the spectacle lens coated with the coating material can be expressed as a percentage or as a value with a maximum of 1.0.

A wavelength at an "intersection point" of the emission spectrum of the intense light source and the absorptance spectrum of the spectacle lens is determined based on a normalized emission spectrum of the intense light source, normalized to its maximum value, and the absorptance spectrum of the spectacle lens. Preferably, a wavelength range of both spectra is selected such as to comprise said intersection point.

The wavelength range of the optical radiation emitted by the intense light source is limited by one of i), ii) or iii)
i) a) the wavelength at the intersection point of the emission spectrum of the intense light source and the absorptance spectrum of the spectacle lens and b) the maximum wavelength of optical radiation emitted by the intense light source,
ii) a) the wavelength having the value that is 1% to 35% larger than the wavelength at the intersection point of the emission spectrum of the intense light source and the absorptance spectrum of the spectacle lens and b) the maximum wavelength of optical radiation emitted by the intense light source,
iii) a) the wavelength having the value that is 1% to 25% smaller than the wavelength at the intersection point of the emission spectrum of said intense light source and the absorptance spectrum of the spectacle lens and b) the maximum wavelength of optical radiation emitted by said intense light source,
and thus excludes the wavelength range of the optical radiation emitted by the intense light source limited by A) the minimum wavelength emitted by said intense light source and the wavelength at said intersection point, or B) the minimum wavelength emitted by the intense light source and the wavelength having the value that is 1% to 35% larger than the wavelength at said intersection point, or C) the minimum wavelength emitted by the intense light source and the wavelength having the value that is 1% to 25% smaller than the wavelength at said intersection point. By excluding a respective wavelength range A), B), or C), ultraviolet radiation is, depending on i) the wavelength at said intersection point or ii) the wavelength having the value that is 1% to 35% larger than the wavelength at said intersection point, or iii) the wavelength having the value that is 1% to 25% smaller than the wavelength at said intersection point, completely or at least partially excluded.

Despite of the ultraviolet radiation being as high-energy form of the optical radiation emitted by the intense light source suitable for a fast generation of heat when absorbed by at least one of the spectacle lens and the coating material on the surface of the spectacle lens, preferably a) the spectacle lens or b) the spectacle lens and the coating material on the surface of the spectacle lens, thus in turn resulting in a fast curing of said coating material on said surface of said spectacle lens, not excluding ultraviolet radiation completely or at least partially when curing said coating material on said surface of said spectacle lens was found to have undesirable effects such as crazing of the coating and/or the spectacle lens, yellowing or even darkening of the spectacle lens, yellowing, colour change or even darkening of the coating material. The fast generation of heat when absorbed by at least one of the spectacle lens and the coating material on the surface of the spectacle lens is assumed to result in a too fast curing or overcuring of said coating material on said surface of said spectacle lens or to result in inhomogeneous curing throughout said coating material on said surface of said spectacle lens, thus in turn is assumed to cause crazing of the coating and/or the spectacle lens. Crazing may occur, for example, when too fast curing causes shrinkage of the coating material. Crazing may also occur, for example, when, due to a different thermal expansion rate, the spectacle lens and the coating material have a different thermal expansion coefficient. Further, crazing may occur, when the coating material is inhomogeneously cured, for example a crosslinking of the resulting coating is higher near an outer surface than near an interface to the spectacle lens. The yellowing or the darkening of the spectacle lens is assumed to high-energy photons of the ultraviolet radiation causing breakage of chemical bonds/moieties of an optical material of the spectacle lens. The optical material is as defined in ISO 13666:2019(E), entry 3.3.1 , a transparent material capable of being manufactured into optical components. Preferably, the optical material is a thermosetting hard resin as defined in ISO 13666:2019(E), entry 3.3.3, or a thermoplastic hard resin as defined in ISO 13666:2019(E), entry 3.3.4. Typical optical materials are sold under the tradenames CR-39, CR-330, CR-607, CR-630, RAV 700, RAV 7NG, RAV 7AT, RAV 710, RAV 713, RAV 720, RAVolution, Trivex, Panlite, Lexan, Makrolon, MR10, MR7, MR8 or Tribrid.

The yellowing or the darkening of the spectacle lens may be even more pronounced when the optical material of the spectacle lens is based on polyurethane or episulfide resins known to be sensitive to ultraviolet radiation as for example the optical materials commercially available as MR-7, MR-8, or MR-174, company Mitsui Chemicals, do. The yellowing preferably is expressed as yellowness index, the yellowness index as as defined in ISO 17223:2014(E), entry 3.1, as deviation in chroma from colourless or whiteness toward yellow. Preferably, the yellowness index is derived by formula (2) of ISO 17223:2014(E), entry 6.1.

The yellowing or even the darkening of the coating material is assumed to high-energy photons of the ultraviolet radiation causing breakage of chemical bonds/moieties of the coating material. Coating materials which contain dyes/pigments (like tinted coating materials or photochromic coating materials) could show bleaching and colour change of the dyes/pigments when exposed to UV light. Coating materials which contain (nano)particles with photocatalytic degradation behavior (like TiOz) could cause degradation of the coating materials when exposed to UV light.

Preferably, to counterbalance the exclusion of the wavelength range of the optical radiation emitted by the intense light source, said excluded wavelength range being limited by a) the minimum wavelength emitted by said intense light source and the wavelength at the intersection point of the emission spectrum of the intense light source and the absorptance spectrum of the spectacle lens or b) the minimum wavelength emitted by said intense light source and the wavelength having the value that is 1% to 35% larger than the wavelength at said intersection point of the emission spectrum of the intense light source and the absorptance spectrum of the spectacle lens or c) the minimum wavelength emitted by the intense light source and the wavelength having the value that is 1% to 25% smaller than the wavelength at said intersection point of the emission spectrum of the intense light source and the absorptance spectrum of the spectacle lens, more radiant energy within the not excluded wavelength range of the optical radiation emitted by the intense light source is applied for curing or for accelerated curing the coating material on the surface of the spectacle lens, accelerated curing compared to oven curing said coating material on said surface of said spectacle lens. Oven curing preferably uses a temperature below a temperature at which at least one of an optical appearance and a form of said spectacle lens and/or said coating material starts to deviate. Typically, oven curing said coating material on said surface of said spectacle lens uses the temperature in a range of 85°C to 120°C, preferably within a time of 30 minutes to 240 minutes, for example within a time between 30 minutes and 120 minutes, preferably in ambient air. The application of more radiant energy for curing or for accelerated curing the coating material on the surface of the spectacle lens is possible as long as no undesirable effects such as the ones mentioned before, crazing, yellowing or darkening of the spectacle lens and/or the coating material, occur. Not excluding said wavelength range of the optical radiation emitted by the intense light source does not allow to apply more radiant energy even in case the coating material is not completely cured. In other words, when the radiant energy within the full wavelength range of the intense light source is used for curing the coating material on the surface of the spectacle lens and crazing or yellowing of the spectacle lens and/or the coating material is already observed with respect to a not completely and/or homogeneously cured coating material an increase of the radiant energy or an extension of curing time is usually not possible as an adverse optical appearance of the spectacle lens and/or the coating material only would worsen. A difference in luminous transmittance of the spectacle lens coated with the coating material and/or the coating before and after tinting the spectacle lens might be used as an indication for a curing state of the coating material on the surface of the spectacle lens. The luminous transmittance is defined analogously as in ISO 13666:2019(E), entry 3.17.6, as a ratio of the luminous flux transmitted by the spectacle lens to the incident luminous flux for a specified illuminant and photopic vision. For tinting the spectacle lens tinting conditions as described in EP 2 966 484 A1, paragraphs [0053] to [0055] may be used. The higher the loss in luminous transmittance, i.e., the higher the tint uptake is, the less the curing state of the coating material on the surface of the spectacle lens is assumed to be. Further, a spectacle lens comprising a coating resulting from the not completely and preferably homogeneously cured coating material usually shows besides the higher tint uptake a lower mechanical performance, quantifiable, for example, in a lower value for a Bayer ratio when compared to a spectacle lens comprising said coating but fully cured. In addition, the coating resulting from the not completely and preferably homogeneously cured coating material on the spectacle lens may have a weaker adhesion to said spectacle lens compared to said coating when fully cured, the weaker adhesion quantifiable by a failure in a cross-hatch test.

An additional beneficial effect of the exclusion of said wavelength range of the optical radiation emitted by the intense light source, as described before, is that a glass envelope, in particular a quartz glass envelope, of the intense light source does not suffer from solarization and therefore the life of the intense light source is not limited by solarization of the glass envelope of the intense light source. Solarization is another form of devitrification that occurs when quartz is exposed to deep ultraviolet (UV) radiation in a high-temperature environment. Solarization occurs because quartz contains microscopic impurities, such as metals, which absorb UV energy and cause localized devitrification at these sites. Devitrification is the process of quartz atoms rearranging themselves into an orderly, crystalline structure. Quartz only exists as a smooth, clear material because the atoms have difficulty forming a regular pattern before the molten material cools into a solid. Devitrification can affect the optical properties of the quartz, cause it to lose its glassy structure, and increase the risk of cracking or breaking.

The wavelength range of the optical radiation emitted by the intense light source that is excluded according to one of the criteria mentioned before, preferably nonetheless ensures an overlap between the emission spectrum of the intense light source and the absorptance spectrum of the spectacle lens. The overlap between the emission spectrum of the intense light source and the absorptance spectrum of the spectacle lens preferably refers to a wavelength range in which the spectacle lens is able to absorb larger than or equal to 2.0% of the optical radiation emitted by the intense light source. Preferably, the overlap between the emission spectrum of the intense light source and the absorptance spectrum of a clear spectacle lens refers to a wavelength range in which the clear spectacle lens is able to absorb the optical radiation emitted by the intense light source in one of the following ranges: a range from 3% to 90%, a range from 5% to 60%, a range from 7% to 30%, a range from 8% to 15%, the clear spectacle lens as defined in ISO 13666:2019(E), entry 3.5.7.

Preferably, the overlap between the emission spectrum of the intense light source and the absorptance spectrum of a tinted spectacle lens refers to a wavelength range in which the tinted spectacle lens is able to absorb the optical radiation emitted by the intense light source in one of the following ranges: a range from 12% to 90%, a range from 13% to 75%, a range from 14% to 60%, a range from 15% to 45%, the tinted spectacle lens as defined in ISO 13666:2019(E), entry 3.5.6. Preferably, the overlap between the emission spectrum of the intense light source and the absorptance spectrum of a photochromic spectacle lens refers to a wavelength range in which the photochromic spectacle lens is able to absorb the optical radiation emitted by the intense light source in one of the following ranges: a range from 12% to 90%, a range from 14% to 70%, a range from 16% to 50%, a range from 19% to 35%, the photochromic spectacle lens as defined in ISO 13666:2019(E), entry 3.5.11.

The overlap between the emission spectrum of the intense light source and the absorptance spectrum of the spectacle lens may alternatively refer to a wavelength range in which the spectacle lens coated with the coating material is able to absorb larger than or equal to 2.0% of the optical radiation emitted by the intense light source. In this alternative, preferably, the overlap between the emission spectrum of the intense light source and the absorptance spectrum of the spectacle lens refers to a wavelength range in which the spectacle lens coated with the coating material is able to absorb the optical radiation emitted by the intense light source in one of the following ranges:
- a range from 3% to 90%, a range from 5% to 60%, a range from 7% to 30%, a range from 8% to 15%, in case the spectacle lens coated with the coating material is the clear spectacle lens;
- a range from 12% to 90%, a range from 13% to 75%, a range from 14% to 60%, a range from 15% to 45%, in case the spectacle lens coated with the coating material is the tinted spectacle lens;
- a range from 12% to 90%, a range from 14% to 70%, a range from 16% to 50%, a range from 19% to 35%, in case the spectacle lens coated with the coating material is the photochromic spectacle lens. The overlap is assumed to be responsible to generate needed heat inside a) the spectacle lens or b) the spectacle lens comprising the coating material to ensure curing or accelerated curing of the coating material. Hence, preferably the wavelength range of the optical radiation emitted by the intense light source is excluded such that the radiant energy emitted by the intense light source and absorbed by a) the spectacle lens or b) the spectacle lens comprising the coating material, within the overlap is sufficient to cure the coating material on the surface of the spectacle lens. If the overlap is not enough, then regardless of how much more radiant energy is applied to the spectacle lens coated with coating material, the heat generation within the spectacle lens or within the spectacle lens and the coating material is not enough and the coating remains undercured.

Compared to the activating light applied to a spectacle lens, according to WO 00/56527 A1, page 75, lines 26 to 29, at a wavelength range of about 360 to 370 nm and at a wavelength range of about 250 to 260 nm in an intensity sufficient for initiating a photocatalytic reaction, the wavelength ranges mentioned in WO 00/56527 A1 may be excluded according to the criteria mentioned before and for the reasons mentioned before but, more important, the radiant energy emitted by the intense light source in the wavelength range limited by a) the maximum wavelength emitted by said intense light source and the wavelength at the intersection point of the emission spectrum of the intense light source and the absorptance spectrum of the spectacle lens or b) the maximum wavelength emitted by said intense light source and the wavelength having the value that is 1% to 35% larger than the wavelength at said intersection point of the emission spectrum of the intense light source and the absorptance spectrum of the spectacle lens or c) the maximum wavelength emitted by the intense light source and the wavelength having the value that is 1% to 25% smaller than the wavelength at said intersection point of the emission spectrum of the intense light source and the absorptance spectrum of the spectacle lens, is, if applicable, not only sufficient for initiating a photocatalytic reaction but sufficient to thermally cure the coating material on the surface of the spectacle lens by absorption. In other words, heating of the spectacle lens plus coating material is responsible for curing the coating material on the surface of the spectacle lens. Thermally curing the coating material on the surface of the spectacle lens is only possible if enough radiant energy is converted to enough heat by interaction with the spectacle lens or with the spectacle lens comprising the coating material. A comparable amount of radiant energy is not needed in case only a photocatalytic reaction needs to be initiated and thus the coating material does not need a thermal curing step. In other words, applying activating light with an intensity of 150 to 300 mW/cm² at a wavelength range of about 360 to 370 nm and about 50 to 150 mW/cm² at a wavelength range of about 250 to 260 nm for curing a liquid scratch resistant coating material as disclosed in WO 00/56527 A1, page 75, lines 26 to 29, this amount of radiant flux is enough to initiate a photo catalyst, however, it is not enough to ensure complete curing, if the coating material is only thermally curable or requires an additional step of thermal curing to fully cure the coating material. For example, within the not excluded wavelength range according to the criteria mentioned before, the radiant flux is applied with an average irradiation intensity (irradiance) I in the range 1000 mW/cm² ≤I, preferably in the range 10000 mW/cm² ≤ I, preferably in the range 20000 mW/cm² ≤ I, preferably in the range 40000 mW/cm² ≤ I.

So, in summary, the coating material on the surface of the spectacle lens is cured fully by a thermal curing process, whereby the coating material does not necessarily need to comprise a photo initiator and hence does not need respective wavelengths of ultraviolet radiation. However, depending on the excluded wavelength range it is not necessarily excluded that the coating material on the surface of the spectacle lens is cured fully by a combination of a thermal and a light activation photocatalytic curing process. In case of more than one coating material being applied to the surface of the spectacle lens, each coating material thereof may be cured according to a different curing process.

Despite of excluding the wavelength range of the optical radiation emitted by the intense light source, as described before, the radiant energy absorbed by the spectacle lens still is sufficient to cure or to accelerate cure of the coating material on the surface of the spectacle lens. On the other hand, excluding the wavelength range provides room to apply more radiant energy to the spectacle lens (plus the coating material) without compromising any crazing, yellowing, or even darkening of the spectacle lens and/or the coating material. Applying more radiant energy results in complete curing of the thermally curable coating material within a shorter curing time in a same level compared to conventional oven curing. Further, as the exclusion of the wavelength range of the optical radiation emitted by the intense light source is dependent on the intense light source, via the emission spectrum of the intense light source, and on the spectacle lens, via the absorptance spectrum of the spectacle lens, said wavelength range is adjustable to the optical material of the spectacle lens. To sum up, curing, within the curing time ranging from 1 ms to 3 min, the coating material on the surface of the spectacle lens using optical radiation emitted by the intense light source, said coating material resulting in the coating on said surface of said spectacle lens, thereby excluding the wavelength range of said optical radiation according to the criteria mentioned before, allows the application of radiant energy sufficient to fully cure the coating material without damaging the spectacle lens and/or the coating material. Preferably, thereby the coating material results in the coating that has at least comparable properties as if said coating material would have been oven cured. As a measure for the coating to be fully cured the tint uptake or in case of a hard coating the scratch resistance may be considered. At the same time the exclusion of the wavelength range according to one of the criteria mentioned before is unique for a selected combination of A) spectacle lens, optionally A1) spectacle lens comprising the coating material, and B) intense light source.

Preferably, the method for manufacturing a spectacle lens comprising the step of:
- curing the coating material on the surface of the spectacle lens using optical radiation emitted by the intense light source, said coating material resulting in the coating on said surface of said spectacle lens,
is characterized in that the wavelength having the value that is 1% to 35% larger than said wavelength at said intersection point of said emission spectrum of said intense light source and said absorptance spectrum of said spectacle lens is any wavelength in a wavelength range between
a) the wavelength at the intersection point of the emission spectrum of the intense light source and the absorptance spectrum of the spectacle lens, excluding the wavelength at said intersection point, and
b1) a smallest wavelength at which the absorptance of the spectacle lens is equal to 2% or 0.02, including said smallest wavelength, or
b2) a wavelength that is at least one of
   - 10% to 30% larger than said wavelength at the intersection point of the emission spectrum of the intense light source and the absorptance spectrum of the spectacle lens, including a respective wavelength,
   - 12% to 25% larger than said wavelength at the intersection point of the emission spectrum of the intense light source and the absorptance spectrum of the spectacle lens, including a respective wavelength,
   - 14% to 20% larger than said wavelength at the intersection point of the emission spectrum of the intense light source and the absorptance spectrum of the spectacle lens, including a respective wavelength.

A wavelength larger than the wavelength at the intersection point of the emission spectrum of the intense light source and the absorptance spectrum of the spectacle lens is any wavelength in a wavelength range between a) the wavelength at the intersection point of the emission spectrum of the intense light source and the absorptance spectrum of the spectacle lens, excluding the wavelength at said intersection point, and b1) a smallest wavelength at which the absorptance of the spectacle lens is equal to 2% or 0.02, including said smallest wavelength, in case said smallest wavelength is larger than said wavelength at said intersection point or b2) a wavelength that is at least one of 10% to 30% larger than said wavelength at the intersection point of the emission spectrum of the intense light source and the absorptance spectrum of the spectacle lens, 12% to 25% larger than said wavelength at said intersection point, 14% to 20% larger than said wavelength at said intersection point, including a respective wavelength, preferably in case said smallest wavelength of b1) is not larger than said wavelength at said intersection point. The wavelength larger than the wavelength at the intersection point of the emission spectrum of the intense light source and the absorptance spectrum of the spectacle lens preferably is selected such that a radiant energy emitted by the intense light source excluding any wavelength smaller than said wavelength larger than the wavelength at the intersection point of the emission spectrum of the intense light source and the absorptance spectrum of the spectacle lens is sufficient to cure the coating material on the surface of the spectacle lens within a significantly shorter time than that is needed to oven cure said coating material on said surface of said spectacle lens. Photonic curing reduces the curing time significantly shorter with respect to time preferably is when the coating material on the surface of the spectacle lens is cured within a time that is 2% or less a time needed to oven cure said coating material on said surface of said spectacle lens. With respect to the advantages of excluding the wavelength range, reference is made to the explanation given before.

Preferably, the method for manufacturing a spectacle lens comprising the step of:
- curing the coating material on the surface of the spectacle lens using optical radiation emitted by the intense light source, said coating material resulting in the coating on said surface of said spectacle lens,
is characterized in that the wavelength having the value that is 25% smaller than said wavelength at said intersection point of said emission spectrum of said intense light source and said absorptance spectrum of said spectacle lens is any wavelength in a wavelength range between
a) the wavelength at the intersection point of the emission spectrum of the intense light source and the absorptance spectrum of the spectacle lens, excluding the wavelength at said intersection point, and
b1) a cut-off wavelength of the spectacle lens, including said cut-off wavelength, in case said cut-off wavelength is smaller than said wavelength at said intersection point, or
b2) a maximum wavelength of ultraviolet radiation, including a respective maximum wavelength of ultraviolet radiation.

A wavelength smaller than the wavelength at the intersection point of the emission spectrum of the intense light source and the absorptance spectrum of the spectacle lens is any wavelength in a wavelength range between a) the wavelength at the intersection point of the emission spectrum of the intense light source and the absorptance spectrum of the spectacle lens, excluding the wavelength at said intersection point, and b1) a cut-off wavelength of the spectacle lens, including said cut-off wavelength, in case said cut-off wavelength is smaller than said wavelength at said intersection point, or b2) a maximum wavelength of ultraviolet radiation, including a respective maximum wavelength of ultraviolet radiation, preferably in case of said cut-off wavelength of b1) not being smaller than said wavelength at said intersection point. The cut-off wavelength of the spectacle lens is a wavelength at which a spectral transmittance of the spectacle lens starts being continuously equal to or smaller than 1%, the spectral transmittance as defined in ISO 13666:2019(E), entry 3.17.1.

Ultraviolet radiation is as defined in ISO 13666:2019(E), entry 3.1.3, the optical radiation (3.1.1) for which wavelengths are shorter than those for visible radiation (3.1.2). Further analogously as in note 1 to entry 3.1.3 of ISO 13666:2019(E), a UV range is subdivided into UV-A: 315 nm to 380 nm; UV-B: 280 nm to 315 nm; UV-C: 100 nm to 280 nm. The maximum wavelength of ultraviolet radiation is selected from one of the group consisting of a maximum wavelength limiting the UV-A range, i.e., 380 nm, a maximum wavelength limiting the UV-B range, i.e., 315 nm, and a maximum wavelength limiting the UV-C range, i.e., 280 nm.

The wavelength smaller than the wavelength at the intersection point of the emission spectrum of the intense light source and the absorptance spectrum of the spectacle lens preferably is selected such that a radiant energy emitted by the intense light source excluding any wavelength smaller than said wavelength smaller than the wavelength at the intersection point of the emission spectrum of the intense light source and the absorptance spectrum of the spectacle lens does not results in undesirable effects such as crazing of the coating, yellowing or even darkening of the spectacle lens. With respect to the advantages of excluding the wavelength range, reference is made to the explanation given before.

Preferably, the method for manufacturing a spectacle lens comprising the step of:
- curing the coating material on the surface of the spectacle lens using optical radiation emitted by the intense light source, said coating material resulting in the coating on said surface of said spectacle lens,
is characterized in that said wavelength larger than said wavelength at said intersection point of said emission spectrum of said intense light source and said absorptance spectrum of said spectacle lens or said wavelength smaller than said wavelength at said intersection point of said emission spectrum of said intense light source and said absorptance spectrum of said spectacle lens each is selected such that a radiant flux emitted by said intense light source is sufficient to cure said coating material on said surface of said spectacle lens within the total curing time.

Reference is made to the explanation given before, in particular with respect to the overlap. Preferably, the radiant flux is applied with an irradiance I in one of the following ranges:
- a range of 1000 mW/cm² ≤ I ≤ 40000 mW/cm²,
- a range of 10000 mW/cm2 ≤ I ≤ 40000 mW/cm2,
- a range of 20000 mW/cm² ≤ I ≤ 40000 mW/cm².

Preferably, the method for manufacturing a spectacle lens comprising the step of:
- curing the coating material on the surface of the spectacle lens using optical radiation emitted by the intense light source, said coating material resulting in the coating on said surface of said spectacle lens,
is characterized in that the excluded wavelength range is selected such that an overlap in form of a wavelength range between the emission spectrum of the intense light source and the absorptance spectrum of the spectacle lens ensures the spectacle lens to absorb larger than or equal to 2.0% of optical radiation emitted by the intense light source.

Preferably, the overlap is in one of the following ranges:
- a range from 3% to 90%, a range from 5% to 60%, a range from 7% to 30%, a range from 8% to 15%, in case of a clear spectacle lens, the clear spectacle lens as defined in ISO 13666:2019(E), entry 3.5.7,
- a range from 12% to 90%, a range from 13% to 75%, a range from 14% to 60%, a range from 15% to 45%, in case of a tinted spectacle lens, the tinted spectacle lens as defined in ISO 13666:2019(E), entry 3.5.6,
- a range from 12% to 90%, a range from 14% to 70%, a range from 16% to 50%, a range from 19% to 35%, in case of a photochromic spectacle lens, the photochromic spectacle lens as defined in ISO 13666:2019(E), entry 3.5.11.

Preferably, the method for manufacturing a spectacle lens comprising the step of:
- curing the coating material on the surface of the spectacle lens using optical radiation emitted by the intense light source, said coating material resulting in the coating on said surface of said spectacle lens,
is characterized in that a temperature on the surface of the spectacle lens or a temperature of the spectacle lens does not exceed a temperature of 170°C.

During curing the coating material on the surface of the spectacle lens a temperature on the surface of the spectacle or a temperature of the spectacle lens might be difficult to be measured exactly or directly. An indirect indication that a threshold temperature on the surface of the spectacle lens or of the spectacle lens has been exceeded is that the spectacle lens after curing the coating material on the surface of the spectacle lenses shows undesirable effects as crazing of the coating, yellowing, or darkening of the spectacle lens. The threshold temperature can be indirectly estimated by the radiant energy emitted by the intense light source within a predefined time on a predefined surface area. The radiant energy emitted by the intense light source is on the one hand side absorbed by the spectacle lens itself and by a curing plate the spectacle lens is placed on. The curing plate or curing tray is an open receptable, preferably made of metal, having a flat bottom and a low rim for holding and carrying the spectacle lens. The radiant energy absorbed by the spectacle lens and by the curing plate is converted to thermal energy increasing the temperature of the spectacle lens and the curing plate and thus being responsible for indirectly contributing to curing the coating material on the surface of the spectacle lens. Even though the thermal energy may be removed through convection, optionally assisted by air cooling, it is assumed that a temperature in particular at a contact point between an edge of the spectacle lens and the curing plate is responsible for the undesirable effects, i.e., crazing, yellowing or darkening of the spectacle lens especially on an edge of the spectacle lens at a contact point with the curing plate. This effect gets more pronounced on spectacle lenses with thin edges as the heat accumulation is more pronounced then at the contact point of the thin edge with the curing plate.

Nevertheless, as discussed with respect to curing a hard coating material on the surface of the spectacle lens in section IV below in detail, not to undercure the coating material on the surface of the spectacle lens and to cure the coating material within a very short time, the radiant energy emitted by the intense light source preferably need to be well balanced and, if necessary, more radiant energy could be applied to ensure full curing. Preferably, said threshold temperature on the surface of the spectacle lens or of the spectacle does not exceed a temperature of 170°C. Preferably, a temperature of the curing plate at the contact point does not exceed a temperature of 250°C. Hence, preferably to cure the coating material on the surface of the spectacle lens within a total curing time ranging from 1 ms to 3 min, using optical radiation emitted by the intense light source excluding the wavelength range of said optical radiation emitted by said intense light source according to one of the criteria mentioned before the radiant flux is selected such that a temperature of the coating material and the spectacle lens is not exceeding 170°C and that the temperature on the contact point between the spectacle lens and the curing plate is not exceeding 250°C.

To avoid a temperature rise of the curing plate at least one of increasing a mass of the curing plate or increasing a reflectance of the curing plate preferably is a means of choice to keep the temperature on the surface of the spectacle lens or the temperature of the spectacle lens below said threshold temperature. To keep the temperature at the contact point between the spectacle lens and curing plate ≤250°C, the average light reflectance of the curing plate (R %) within the range of applied emission wavelength by the intense light source preferably is in the range of R ≥ 5%, preferably R≥35%, preferably in the range of R ≥70%. An indirect measure that the temperature has been kept below said threshold temperature is a comparison with a spectacle lens comprising an oven cured coating whose mechanical and optical properties are comparable with the respective properties of said spectacle lens with said coating, but photonically cured.

In contrast to oven curing which takes hours to cure thermally curable coating materials, photonic curing reduces the curing time to below one minute. The reason is the effect of photonic curing on the kinetic of the curing process. It is known that the higher the temperature of the not cured coating materials during the curing process, the faster the kinetic and hence shorter the curing time. Hence increasing the curing temperature is an approach to shorten the curing time. The temperature of the spectacle lens coated with the coating material cannot exceed 110°C to 120°C inside the oven. Increasing the temperature of oven to fasten the curing process result in shortening the curing time inside oven, however, causes crazing, yellowing and darkening and/or deformation of the spectacle lens and/or the coating material. On the other side, by mean of photonic curing, the temperature of the spectacle lens coated with the coating material could be higher to shorten the curing time without any negative effect on cosmetic of the spectacle lens coated with the coating material. The main reason is that in photonic curing the temperature raise and heat generation inside spectacle lens and the coating material occurs in an extremely short process time. In addition, through pulse architecting, it is possible to break each single intense pulse is into micro pulses which provides microseconds thermal stress relaxing within the spectacle lens and the coating material. Moreover, during photonic curing process the temperature raise is mainly due to volumetric fast absorption inside the coating material and the spectacle lens. This is unlike in an oven in which the temperature raise is gradually and occurs because of heat convection from surface to the bulk of the spectacle lens. Hence it is possible to increase the threshold temperature without causing any cosmetic defect on the spectacle lens coated with the coating material and as a result shorten the curing time in seconds to reach the same curing level as conventional oven curing.

Preferably, for ensuring the temperature on the surface of the spectacle lens or the temperature of the spectacle lens being below 170°C an average reflectance R of said curing plate carrying said spectacle lens is in one of the following ranges:
- a range of ≥ 5% to R ≥70%,
- a range of ≥ 35% to R ≥70%.

Preferably, the method for manufacturing a spectacle lens comprising the step of:
- curing the coating material on the surface of the spectacle lens using optical radiation emitted by the intense light source, said coating material resulting in the coating on said surface of said spectacle lens,
is characterized in that a temperature at a contact point between the spectacle lens and a curing plate carrying said spectacle lens does not exceed a temperature of 250°C.

The method implemented by a processor and being configured for generating curing process parameters, said curing process parameters being configured for the purpose of a use for curing a coating material on a surface of a spectacle lens, said coating material being curable by radiant energy emitted by an intense light source, the method is characterized in the step of:
- Determining a wavelength range of optical radiation between a minimum wavelength emitted by said intense light source and an intersection point between an emission spectrum of the intense light source and an absorptance spectrum of the spectacle lens, the emission spectrum of the intense light source being normalized to a maximum value of the emission spectrum and the absorptance spectrum of the spectacle lens being the absorptance of the spectacle lens as a function of wavelengths.

### Reference is made to the explanation given before.

The computer program comprising instructions which, when the program is executed by a computer, cause the computer to carry out the method described before.

The computer program may be stored on a non-transitory tangible computer-readable storage medium, the computer program comprising instructions which, when the program is executed by a computer, cause the computer to carry out the method described before.

The computer-readable storage medium having stored thereon the computer program.

The computer-readable storage medium may be non-transitory tangible computer-readable storage medium.

The data signal carrying the computer program.

### I Method of curing spectacle lenses according to the examples and comparative examples

Uncoated spectacle lenses were coated on both surfaces, i.e. the front surface and the back surface, with the hard coating material according to example 2 of EP 2 578 649 A1. Optionally, the uncoated spectacle lenses were first coated on both surfaces with the primer coating material according to example 1 of US 5,316,791. The hard coating material and the primer coating material comprised different metal oxide particles to match refractive index of the respective coating with the optical material of the spectacle lens. The coated spectacle lens was first dried with an IR lamp for 5 minutes at 70 °C in ambient air (pre-curing).

For oven curing the coating material on both surfaces of the spectacle lenses (according to comparative example 1, 3, 5, 7, 9 and 10), the respective spectacle lenses were cured at 110°C for 30 or 60 minutes in ambient air.

For photonic curing the coating material on both surfaces of the spectacle lenses (according to examples 1 to 19) using optical radiation emitted by an intense light source, the spectacle lenses were laid down on an Aluminum based photonic curing plate with a defined mass and reflectance, as specified in Table 1 below. Then, the front surface was exposed to an electromagnetic pulse train consisting of a defined number of electromagnetic pulses (pulse repetition, overlap), as specified in Table 1 below, within a total process duration of 15 seconds per lens in ambient air. The spectrum wavelength of each single electromagnetic pulse was varied from 200 nm to 1000 nm /350 nm to 1000 nm /420 nm to 1000 nm, as specified in Table 1 below. Each of the electromagnetic pulses delivered a defined dose (pulse dose). Each pulse has a defined pulse length and intensity to achieve the target pulse dose. Each pulse was divided into 12 micro-pulses at an average duty-cycle of 23%. In this case, the duty cycle is defined to be the ratio of on and off times during one single pulse.

Finally, some coated and cured spectacle lenses were further coated with an anti-reflective coating (AR) according to EP 2 801 846 A1, paragraph [0056].

Detail information regarding the comparative examples and examples is listed in Table 1 below:

**Table 1:**

| **Test number** | **Lens** | **Primer** | **Hard coating** | **AR** | **Curing type** | **Mass (g)** | **Reflectance (%)** | **Spectrum (nm)** | **Pulse repetition** | **Pulse dose (J/cm²)** | **Total Radiant energy (J/cm²)** | **Average radiant power (mW/cm²)** |
|---|---|---|---|---|---|---|---|---|---|---|---|---|
| Comparative Example 1 | CR39 | Yes | Low index | + | Oven (110°C for 30 minutes in ambient air) | | | | | | | |
| Comparative Example 2 | | | | + | Photonic (15 second per lens) | 142.5 | 7 | 200-1000 | 47 | 4.5 | 211.5 | 14100 |
| Example 1 | | | | + | | 142.5 | 7 | 350-1000 | 47 | 4.5 | 211.5 | 14100 |
| Example 2 | | | | + | | 142.5 | 7 | 350-1000 | 62 | 4.5 | 279 | 18600 |
| Example 3 | | | | | | 255 | 7 | 350-1000 | 62 | 4.5 | 279 | 18600 |
| Example 4 | | | | | | 142.5 | 70 | 350-1000 | 62 | 4.5 | 279 | 18600 |
| Example 5 | | | | + | | 255 | 70 | 350-1000 | 75 | 4.5 | 337.5 | 22500 |
| Example 6 | | | | | | 255 | 70 | 350-1000 | 85 | 4.5 | 382.5 | 25500 |
| Example 7 | | | | | | 255 | 70 | 425-1000 | 78 | 4.5 | 351 | 23400 |
| Comparative Example 3 | MR8 | No | High index | + | Oven (110°C for 60 minutes in ambient air) | | | | | | | |
| Comparative Example 4 | | | | + | Photonic (15 second per lens) | 142.5 | 7 | 200-1000 | 64 | 3.5 | 224 | 14933 |
| Example 8 | | | | | | 142.5 | 7 | 350-1000 | 64 | 3.5 | 224 | 14933 |
| Example 9 | | | | + | | 142.5 | 7 | 350-1000 | 70 | 3.5 | 245 | 16333 |
| Example 10 | | | | + | | 255 | 70 | 350-1000 | 95 | 3.5 | 332.5 | 22166 |
| Example 11 | | | | | | 255 | 70 | 350-1000 | 105 | 3.5 | 367.5 | 24500 |
| Comparative Example 5 | MR7 | No | High index | + | Oven (110°C for 60 minutes in ambient air) | | | | | | | |
| Comparative Example 6 | | | | + | Photonic (15 second per lens) | 142.5 | 7 | 200-1000 | 64 | 3.5 | 224 | 14933 |
| Example 12 | | | | | | 142.5 | 7 | 350-1000 | 64 | 3.5 | 224 | 14933 |
| Example 13 | | | | + | | 142.5 | 7 | 350-1000 | 70 | 3.5 | 245 | 16333 |
| Example 14 | | | | + | | 255 | 70 | 350-1000 | 95 | 3.5 | 332.5 | 22166 |
| Example 15 | | | | | | 255 | 70 | 350-1000 | 105 | 3.5 | 367.5 | 24500 |
| Comparative Example 7 | MR1.7 4 | Yes | High index | + | Oven (110°C for 60 minutes in ambient air) | | | | | | | |
| Example 16 | | | | | second per lens) | 255 | 70 | 200-1000 | 120 | 2.0 | 240 | 16000 |
| Example 17 | | | | + | | 255 | 70 | 350-1000 | 150 | 2.0 | 300 | 20000 |
| Comparative Example 8 | MR8 | Yes | High index | + | Oven (110°C for 60 minutes in ambient air) | | | | | | | |
| Example 18 | | | | + | Photonic (15 second per lens) | 255 | 70 | 350-1000 | 160 | 2.0 | 320 | 21300 |
| Comparative Example 9 | MR7 | Yes | High index | + | Oven (110°C for 60 minutes in ambient air) | | | | | | | |
| Example 19 | | | | + | Photonic (15 second per lens) | 255 | 70 | 350-1000 | 160 | 2.0 | 320 | 21300 |

### II Characterization of the spectacle lenses according to the examples and comparative examples

The main criteria to study the performances of the spectacle lenses are crazing probability, optical performance (transmittance and yellowness index YI), mechanical properties (Bayer ratio and indentation hardness) and adhesion of the coating to the uncoated spectacle lens (cross hatch). Probability of crazing is determined by trials using 10 identical spectacle lenses with +6.00 dpt, 0.00 dpt and -2.00 dpt with diameter of 60-70 mm. Failure criteria:
- Craze length > 5 mm → failure
- Number of crazes on lens >1 → failure

For the spectacle lenses according to the comparative examples above, there are two main types of crazing on the hard coating:
a) Crazing on hard coating on the edge of spectacle lenses usually length < 15 mm → main reason is high temperature at contact point between lens and photonic curing plate
b) Crazing on the hard coating throughout the lenses usually length > 10 mm → main reason is high local temperature on hard coating/spectacle lens.

Optical performance (YI and Transmittance %) after the curing process expected to be comparable between the spectacle lens according to the examples and comparative examples.

For the determination of transmittance, a PerkinElmer Lambda 950S double-beam scanning spectrophotometer was used.

The yellowness index of the coated spectacle lenses of the examples and comparative examples was determined according to DIN 6167 and has been calculated from the standard colour values X, Y, Z according to G = [(aX-bY)/Yj 100, with a = 1,301 and b = 1,149 (standard illuminate D65, standard observer 10').

Ila Mechanical performance (Bayer ratio and indentation hardness) after the curing process:
For the determination of the indentation hardness of the coating of the spectacle lenses according to the examples and comparative examples, a diamante indenter with a conic tip of 2 pm ± 0,2 pm radius and a cone of 90° ±1,5° as pressed into the surface of the coating of the spectacle lenses according to the examples and comparative examples while both penetration depth and normal load were monitored. The indentation hardness was obtained from the force-displacement curve according to manufacturer specifications. The indentation hardness has been determined with the Ultra Nanoindentation Tester UNHT', company Anton Paar GmbH. If the indentation > 400 MPa, then the hardness value is accepted.

For the determination of the scratch resistance of the coating of the spectacle lenses according to the examples and comparative examples, the Bayer ratio was determined according to the COLTS operating procedure. A small pan loaded with a spectacle lens according to the examples or comparative examples as well as loaded with an uncoated diethylene glycol bisallylcarbonate spectacle lens (CR-39 lens) is shaken back and forth a distance of 4 inches, at 150 cycles per minute for 4 minutes. Holes that have been placed across the center section of the pan allow the spectacle lenses to protrude up through the center of each hole, resulting in abrasion in the presence of Kryptonite B as abrasion media. The spectacle lens according to the examples or comparative examples and the CR-39 lens had a hazemeter measurement completed prior to abrasion and another following abrasion. The resulting haze gain of the spectacle lens according to the examples and comparative examples is divided into the resulting haze of the CR-39 lens to establish a ratio of how many more times abrasion resistant the spectacle lens according to the examples or comparative examples is compared to the CR-39 lens. The Bayer ratio R is defined as Dstd/Dtest, with Dstd being the final % haze value of the CR-39 lens minus the initial % haze value of the CR-39 lens and Dtest being the final % haze value of the spectacle lens according to the examples or comparative examples minus the initial % haze value of the spectacle lens according to the examples and comparative examples. The haze-gard plus, company BYK-Gardner GmbH, was used for haze measurement The higher the Bayer ratio of a coating, the more scratch resistant is the coating. A coating having a Bayer ratio of 1 means that the coating has the same scratch resistance as the CR-39 lens. Comparable Bayer values between comparative examples and examples are desired.

### IIb Adhesion (Cross hatch) after the curing process

Adhesion (Cross hatch) after the curing process must meet the specification below:
- value must be ≤ 1, less than 5% delamination

For the determination of the adhesion of the coating of the spectacle lenses according to the examples or comparative examples the cross-cut test was done, using a blade to cut through the coating to the substrate. At least two cuts are made that intersect at 90 degrees to get a right-angle lattice pattern. The adhesive tape Scotch 600, company 3M, was applied to and removed from the lattice pattern The cross-cut area was visually examined for any adhesion failure with the naked eye according to the catalogue "QC solutions for coatings and plastics 2018", BYK-Gardner, page 158:
- 0 means that the edges of the cuts were completely smooth, none of the squares of the lattices were detached;
- 1 means that at the intersections of the cuts small flakes were detached, a cross-cut area not significantly greater than 5% was affected;
- 2 means that the coating has been flaked along the edges and/or at the intersections of the cuts, a cross-cut area significantly greater than 5%, but not significantly greater than 15% was affected;
- 3 means that the coating has been flaked along the edges of the cuts partly or wholly in large ribbons and/or it has been flaked partly or wholly on different parts of the squares, a cross-cut area greater than 15%, but not significantly greater than to 35% was affected;
- 4 means that the coating has been flaked along the edges of the cuts in large ribbons and/or some squares have been detached partly or wholly, a cross-cut area significantly greater than 35%, but not significantly greater than 65% was affected;
- 5 means that any degree of flaking that could not even be classified by classification 4.

### IIc Reflection of curing plate

Reflection of curing plate was measured using Filmetrics LS-DT2 using Deuterium Tungsten Halogen light source with wavelength range of 190-1100 nm. The reported reflection is an average value of the reflection within the measurement wavelength.

### III Results

Table 2 below shows the results of each spectacle lens according to the examples and comparative examples:

**Table 2:**

| **Example / Comparative example** | **Process time (s)** | **Crazing probability on coating** | **Dominant Crazing type** | **Without AR** | | | | | **With AR** | | |
|---|---|---|---|---|---|---|---|---|---|---|---|
| | | | | **Indentation hardness (MPa) Front\|Back** | **Bayer ratio** | **YI** | **Trans-mittanc e (%)** | **Cross hatch (front-back)** | **Bayer ratio** | **YI** | **Trans Mittance (%)** |
| **CR39-Primer-Hard coatinq-(AR)** | | | | | | | | | | | |
| Comparative example 1 | 1800 s | 0/10 | - | 490\|500 | 7.5 | 3.2 | 91.1 | 5-5 | 13.0 | 5.2 | 97.2 |
| Comparative example 2 | 30 s | 8/10 | Type a | 460\|440 | 4.0 | 3.3 | 91.5 | 5-5 | 10.5 | 5.3 | 97.0 |
| Example 1 | 30 s | 0/10 | - | 300 | 2.0 | 2.7 | 91.3 | 3-3 | 6.5 | 5.1 | 97.1 |
| Example 2 | 30 s | 3/10 | Type a | 410 | 4.0 | 2.8 | 91.2 | 5-5 | 10.0 | 5.1 | 97.0 |
| Example 3 | 30 s | 0/10 | - | 405 | 3.5 | 2.9 | 91.3 | 5-5 | - | - | - |
| Example 4 | 30 s | 0/10 | - | 400 | 4.0 | 3.0 | 91.1 | 5-5 | - | - | - |
| Example 5 | 30 s | 0/10 | - | 455\|480 | 8.0 | 3.0 | 91.1 | 5-5 | 13.0 | 5.0 | 97.3 |
| Example 6 | 30 s | 4/10 | Type b | 510 | 8.5 | 3.1 | 91.1 | 5-5 | - | - | - |
| Example 7 | 30 s | 0/10 | - | 350 | 3.0 | 3.0 | 91.2 | 2-2 | - | - | - |

| **MR8-Hard coating-(AR)** | | | | | | | | | | | |
|---|---|---|---|---|---|---|---|---|---|---|---|
| Comparative example 3 | 3600 s | 0/10 | - | 580\|595 | 6.0 | 3.2 | 89.5 | 5-5 | 15.0 | 4.8 | 97.5 |
| Comparative example 4 | 30 s | 7/10 | Type a | 576 | 2.5 | 3.7 | 89.1 | 5-4 | 11.0 | 5.1 | 96.5 |
| Example 8 | 30 s | 0/10 | - | 350 | 1.5 | 3.1 | 89.4 | 3-2 | - | - | - |
| Example 9 | 30 s | 2/10 | Type a | 430 | 2.5 | 3.2 | 89.3 | 5-5 | 11.0 | 4.8 | 97.3 |
| Example 10 | 30 s | 0/10 | - | 540\|510 | 6.0 | 3.1 | 89.5 | 5-5 | 15 | 4.6 | 97.5 |
| Example 11 | 30 s | 5/10 | Type b | - | 6.5 | 3.4 | 89.3 | 5-5 | - | - | - |

| **MR7-Hard coating-(AR)** | | | | | | | | | | | |
|---|---|---|---|---|---|---|---|---|---|---|---|
| Comparative example 5 | 3600 s | 0/10 | - | 583\|540 | 5.5 | 3.5 | 89.6 | 5-5 | 15 | 5.0 | 97.5 |
| Comparative example 6 | 30 s | 8/10 | Type a | 588 | 2.5 | 4.0 | 89.2 | 4-4 | 11.0 | 5.3 | 96.5 |
| Example 12 | 30 s | 0/10 | - | - | 1.5 | 3.2 | 89.7 | 2-2 | - | - | - |
| Example 13 | 30 s | 3/10 | Type a | - | 3.0 | 3.4 | 89.8 | 5-5 | 10.0 | 5.0 | 97.3 |
| Example 14 | 30 s | 0/10 | - | 521\|505 | 5.0 | 3.3 | 89.5 | 5-5 | 15.0 | 5.1 | 97 |
| Example 15 | 30 s | 6/10 | Type b | - | 5.5 | 3.5 | 89.2 | 5-5 | - | - | - |

| **MR174-Primer-Hard coating-(AR)** | | | | | | | | | | | |
|---|---|---|---|---|---|---|---|---|---|---|---|
| Comparative example 7 | 3600 s | 0/10 | - | 617\|574 | 6.0 | 4.3 | 88.1 | 5-5 | 16.0 | 5.0 | 96.8 |
| Comparative example 8 | 30 s | 10/10 | Lens darkening | - | - | - | - | - | - | - | - |
| Example 16 | 30 s | 0/10 | - | 631\|543 | 6.0 | 4.7 | 88.2 | 5-5 | 15.0 | 5.5 | 96.7 |

| **MR8-Primer-Hard coating-(AR)** | | | | | | | | | | | |
|---|---|---|---|---|---|---|---|---|---|---|---|
| Comparative example 9 | 3600 s | 0/10 | - | 536 | 7.0 | 3.9 | 88.8 | 5-5 | 16.0 | 5.2 | 97.2 |
| Example 17 | 30 s | 0/10 | - | 568 | 6.5 | 4.0 | 88.9 | 5-5 | 16.0 | 5.2 | 97.1 |

| **MR7-Primer-Hard coating-(AR)** | | | | | | | | | | | |
|---|---|---|---|---|---|---|---|---|---|---|---|
| Comparative example 10 | 3600 s | 0/10 | - | 524 | 7.0 | 4.4 | 88.7 | 5-5 | 16.0 | 5.7 | 97.1 |
| Example 18 | 30 s | 0/10 | - | 607 | 6.5 | 4.4 | 88.9 | 5-5 | 16.0 | 5.7 | 97.1 |

### IV Discussion

For all type of spectacle lenses, high-speed photonic cured coating materials (process time of 15 seconds per lens in ambient air) using full spectrum of optical radiation (light) 200-1000 nm emitted by the intense light source of and photonic curing plate with 142.5 gram and 7% reflection vs. oven cured reference (30-60 minutes) shows lower abrasion (Bayer ratio) and high probability of crazing on hard coating on the edge of spectacle lenses:
- CR39-primer-low index hard coating: comparative example 2 shows lower Bayer value than comparative example 1 (oven cured). In comparative example 2, the probability of crazing is high (80 %) and the dominant crazing is type a (multiple crazing on the edge of lenses with length <15 mm). The optical performance (YI and transmittance), adhesion on both sides of the spectacle lens (cross hatch) and indentation hardness (hardness on both front and back side of spectacle lens) are comparable with comparative example 1.
- MR8-high index hard coating: comparative example 4 shows lower Bayer value and higher YI value than comparative example 3 (oven cured). The probability of crazing is high (70 %) and the dominant crazing is type a (multiple crazing on the edge of spectacle lenses with length <15 mm). The transmittance values are comparable, but YI are higher for comparative example 4 vs comparative example 3. This shows the sensitivity of MR8 lenses when exposed to UV light. The adhesion on front & backside of the spectacle lens (cross hatch) are amounted to 5-4 (front & backside of lens), respectively. The indentation hardness is comparable between comparative example 3 and 4.
- MR7-high index hard coating: comparative example 6 shows lower Bayer value and higher YI value than comparative example 5 (oven cured). The probability of crazing is high (80 %) and the dominant crazing is type a (multiple crazing on the edge of lenses with length <15 mm). The transmittance values are comparable, but YI are higher for comparative example 6 vs comparative example 5. This shows the sensitivity of MR7 lenses when exposed to UV light. The adhesion on front & backside of the spectacle lens (cross hatch) are amounted to 4-4 (front & backside of lens), respectively and slightly lower than comparative example 5. The indentation hardness is comparable between comparative example 5 and 6.
- MR1.74-Primer-high index hard coating: comparative example 8 shows darkening of the spectacle lenses when exposed to the full spectrum of light. This shows extreme sensitivity of MR1.74 spectacle lenses when exposed to UV light.

The reason of lower abrasion properties (Bayer values) is because of under curing of the hard coating (lower curing density). Lower curing density was confirmed by tint uptake trial. This is explained in detail below, respective results are provided in Table 3. To increase abrasion properties (Bayer value) at high-speed photonic process to comparable level with low-speed oven curing for all type of uncoated spectacle lenses/coating materials, more radiant energy must be applied to the coating material/spectacle lens to increase the curing density. However, applying more radiant energy to the coating material/spectacle lens must not cause crazing and/or higher YI values of spectacle lens/hard coating.
- CR39-primer-low index hard coating: comparative example 2 already shows high probability of crazing (80%), and the YI value is already in comparable level as comparative example 1. Hence, it is not possible to apply more radiant energy to increase the Bayer ratio without compromising YI and crazing.
- MR8-high index hard coating: comparative example 4 already shows high probability of crazing (70%), and the YI value is already higher than comparative example 3. Hence, it is not possible to apply more radiant energy to increase the Bayer ratio without compromising YI and crazing.
- MR7-high index hard coating-AR: comparative examples 6 already shows high probability of crazing (80%), and the YI value is already higher than comparative example 5. Hence, it is not possible to apply more radiant energy to increase the Bayer ratio without compromising YI and crazing.

Crazing may occur, for example, when too fast curing causes shrinkage of the coating material. Crazing may also occur, for example, when, due to a different thermal expansion rate, the spectacle lens and the coating material have a different thermal expansion coefficient. Crazing may also occur when there is inhomogeneous curing throughout the coating material. The yellowing or the darkening of the spectacle lens is assumed to high-energy photons of the ultraviolet radiation causing breakage of chemical bonds/moieties of an optical material of the spectacle lens. The yellowing or the darkening of the spectacle lens may be even more pronounced when the optical material of the spectacle lens is based on polyurethane or episulfide resins known to be sensitive to ultraviolet radiation as for example the optical materials commercially available as MR-7, MR-8, or MR-174, company Mitsui Chemicals, do. The yellowing or even the darkening of the coating material is assumed to high-energy photons of the ultraviolet radiation causing breakage of chemical bonds/moieties of the coating material. Coating materials which contain dyes/pigments (like tinted coating materials or photochromic coating materials) could show bleaching and colour change of the dyes/pigments when exposed to UV light. Coating materials which contain (nano)particles with photocatalytic degradation behavior (like TiOz) could cause degradation of the coating materials when exposed to UV light. Hence, high energy photons are one of the reasons for yellowing and crazing of coating/spectacle lens. High energy UV photons cause breakage of chemical bonds (result in yellowing/burning of the lens and/or coating materials). Moreover, high energy UV photons result in fast generation of heat on coating/spectacle lens and as a result rapid locally growth of temperature. This rapid heat generation results in rapid local stress because of fast curing and hence causes crazing on hard coating/spectacle lens.

One approach to reduce crazing and YI of coating/spectacle lens is to remove high energy UV photons using UV filter:
- CR39-primer-low index hard coating: cutting the wavelength of emitted light below 350 nm while keeping the other parameters unchanged reduces the yellowness index and remove the probability of crazing (comparative example 2 vs example 1). However, cutting the wavelength of emitted light, reduces the radiant energy delivered to spectacle lens/hard coating material and hence adversely affect the curing level and subsequently mechanical, abrasion and adhesion properties. Hence the values of the Bayer ratio, indentation hardness and cross hatch of example 1 are lower than those of comparative example 2.
- MR8-high index hard coating: cutting the wavelength of emitted light below 350 nm while keeping the other parameters unchanged reduces the yellowness index and remove the probability of crazing (comparative example 4 vs example 8). However, cutting the wavelength of emitted light, reduces the radiant energy delivered to spectacle lens/hard coating material and hence adversely affect the curing level and subsequently mechanical, abrasion and adhesion properties. Hence the values of the Bayer ratio, indentation hardness and cross hatch of example 8 are lower than those of comparative example 4.
- MR7-high index hard coating: cutting the wavelength of emitted light below 350 nm while keeping the other parameters unchanged reduces the yellowness index and remove the probability of crazing (comparative example 6 vs example 12). However, cutting the wavelength of emitted light, reduces the radiant energy delivered to spectacle lens/hard coating material and hence adversely affect the curing level and subsequently mechanical, abrasion and adhesion properties. Hence the values of the Bayer ratio, indentation hardness and cross hatch of example 12 are lower than comparative example 6.

As discussed above, cutting the light below 350 nm removes the crazing/yellowing of spectacle lens/coating. However, mechanical, abrasion and adhesion properties are lower than long time oven curing references as well as the comparative examples cured while using full spectrum of light. To improve the mechanical, abrasion and adhesion properties, more radiant energy must be applied to the spectacle lens:
- CR39-primer-low index hard coating: increasing the applied radiant energy by increasing the number of pulse repetition (overlap) from 47 (example 1) to 62 (example 2) result in increase in Bayer ratio (from 2.0 to 4.0) as well as cross hatch values. The value of the Bayer ratio and cross hatch are comparable with comparative example 2. However, the crazing probability increases from 0% (example 1) to 30% (example 2). On the other side, still the crazing probability is lower than comparative example 1 (80%) in which the full spectrum was applied. This confirms the positive effect of filtering spectrum on crazing probability. However, the value of the Bayer ratio of example 2 is still lower than comparative example 1 (oven cured). Since still crazing occurs in example 2, it is not possible to apply more radiant energy to further improve the Bayer ratio/mechanical properties. In addition, the YI value of example 2 is lower than comparative example 2 which confirms the positive effect of UV filtering on YI.
- MR8-high index hard coating: increasing the applied radiant energy by increasing the number of pulse repetition (overlap) from 64 (example 8) to 70 (example 9) result in increase in Bayer ratio (from 1.5 to 2.5) as well as cross hatch values. The value of the Bayer is comparable with comparative example 8. However, the crazing probability increases from 0% (example 8) to 20% (example 9). On the other side, still the crazing probability is lower than comparative example 4 (70%) in which the full spectrum of light was applied. This confirms the positive effect of filtering spectrum on crazing probability. However, the value of the Bayer of example 9 is still lower than the value of the Bayer ratio of comparative example 3 (oven cured). Since still crazing occurs in example 9, it is not possible to apply more radiant energy to further improve Bayer/mechanical properties. In addition, the YI value of example 9 is lower than the one of comparative example 4 which confirms the positive effect of UV filtering on YI.
- MR7-high index hard coating: increasing the applied radiant energy by increasing the number of pulse repetition (overlap) from 64 (example 12) to 70 (example 13) result in increase in Bayer ratio (from 1.5 to 3) as well as cross hatch values. The value of the Bayer ratio is comparable with the one of comparative example 6. However, the crazing probability increases from 0% (example 12) to 30% (example 13). On the other side, still the crazing probability is lower than comparative example 6 (70%) in which the full spectrum was applied. This confirms the positive effect of filtering spectrum on crazing probability. However, the value of the Bayer ratio of example 13 is still lower than the one of comparative example 5 (oven cured). Since still crazing occurs in example 13, it is not possible to apply more radiant energy to further improve Bayer ratio/mechanical properties. In addition, the YI value of example 13 is lower than the one of comparative example 6 which confirms the positive effect of UV filtering on YI.

Removing the UV light below 350 nm significantly helps to remove crazing/yellowing/burning on hard coating/spectacle lens. However, the radiant energy is not enough to get same mechanical properties as oven curing comparative examples. Further increasing the radiant energy results in crazing again. The crazes are type a (crazing on edge of the lens). One approach to remove type a craze, is to reduce the temperature on the contact point between hard coating material/spectacle lens and curing plate.

Increasing the mass of curing plate while keeping the other process parameters unchanged, helps to remove the crazing probability by reducing the curing plate temperature at contact point during the curing process:
- CR39-primer-low index hard coating: increasing the mass of curing plate from 142.5 gram (example 2) to 255 gram (example 3) reduces the crazing probability to zero. Bayer ratios, optical performance and adhesion remain almost comparable with example 2.

Increasing the reflection of curing plate (reducing the energy absorption by curing plate) while keeping the other process parameters unchanged, removes the crazing probability by reducing the curing plate temperature at contact point between curing plate and spectacle lens during the curing process:
- CR39-primer-low index hard coating: increasing the reflection of curing plate from 7% (example 2) to 70 % (example 4) helps to reduce the crazing probability to zero. Bayer ratios, optical performance and adhesion remain almost comparable with example 2.

Increasing the mass and reflection of curing plate while keeping the other process parameters unchanged, removes the crazing probability by reducing the photonic curing plate temperature at contact point during the curing process.

Hence, combination of UV filter (removal of high energy UV photons while ensuring enough overlap between emission of light and absorption of coating/spectacle lens) and using high mass/reflectance curing plate (ensures low temperature at contact point between coating material/spectacle lens and curing plate) enables to apply more radiant energy to the coating material/spectacle lens without causing crazing/yellowing. This will ensure high curing density and hence good abrasion properties (high Bayer).

For example, UV filter of <350 nm and curing plate with mass of 255 gram and reflection of 70% enables applying higher energy:
- CR39-primer-low index hard coating: UV filter + high mass/reflectance curing plate provided the flexibility to increase applied radiant energy by increasing the number of pulse repetition (overlap) to 75 (example 5) without any crazing and negative effect on YI. The Bayer ratio increases and is comparable with comparative example 1 (oven cured). Combination of UV filter and high mass/reflectance curing plate enabled improvements in removal of crazing, increasing curing level and hence Bayer ratio and reduction of YI vs comparative example 2, in which the crazing was high and Bayer ratio was low. The adhesion is passed on both front and back surfaces of the spectacle lens. The indentation hardness on both front and back surfaces of the spectacle lens is high (>400 MPa).
- MR8-high index hard coating: UV filter + high mass/reflectance curing plate provided the flexibility to increase applied radiant energy by increasing the number of pulse repetition (overlap) to 95 (example 10) without any crazing and negative effect on YI. The Bayer ratio increases and is comparable with comparative example 3 (oven cured). Combination of UV filter and high mass/reflectance curing plate enabled improvements in removal of crazing, increasing curing level and hence Bayer ratio and reduction of YI vs comparative example 4, in which the crazing was high, Bayer ratio was low, and YI was high. The adhesion is passed on both front and back surfaces of the spectacle lens. The indentation hardness on both front and back surfaces of the spectacle lens is high (>400 MPa).
- MR7-high index hard coating: UV filter + curing plate modification provided the flexibility to increase applied radiant energy by increasing the number of pulse repetition (overlap) to 95 (example 14) without any crazing and negative effect on YI. The Bayer ratio increase and is comparable with comparative example 5 (oven cured). Combination of UV filter and high mass/reflectance curing plate enabled improvements in removal of crazing, increasing curing level and hence Bayer ratio and reduction of YI vs comparative example 6, in which the crazing was high, Bayer ratio was low, and YI was high. The adhesion is passed on both front and back surfaces of the spectacle lens. The indentation hardness on both front and back surfaces of the spectacle lens is high (>400 MPa).
- MR1.74-primer-high index hard coating: in example 16, combination of UV filter and high mass/reflectance curing plate enabled curing of hard coating material on MR1.74 spectacle lenses with no crazing, darkening, yellowing and comparable Bayer ratio vs comparative example 7 (oven cured). The adhesion is passed on both front and back surfaces of the spectacle lens. The indentation hardness on both front and back surfaces of the spectacle lens is high (>400 MPa).
- MR8 and MR7-primer-high index hard coating: in example 17 and 18, combination of UV filter and high mass/reflectance curing plate enabled curing of primer + hard coating material on MR8 and MR7 spectacle lenses, respectively, with no crazing, darkening, yellowing and comparable Bayer ratio vs comparative example 9 and 10 (oven cured). The adhesion is passed on both front and back surfaces of the spectacle lens. The indentation hardness on both front and back surfaces of the spectacle lens is high (>400 MPa).

On the other side, if the applied radiant energy to hard coating materials/spectacle lenses is too much, even in the presence of UV filter and high mass/reflectance curing plate, it causes overheating and as a result higher crazing probability. The crazes are more type b, in which crazes occur throughout the whole hard coating/spectacle lens.
- CR39-primer-low index hard coating: in example 6 higher number of pulse repetition is applied compared with example 5, while keeping other process parameters unchanged. In example 6 crazing probability increases to 40%.
- MR8-high index hard coating: in example 11 higher number of pulse repetition is applied compare with example 10, while keeping other process parameters unchanged. In example 11 crazing probability increases to 50%.
- MR7-high index hard coating: in example 15 higher number of pulse repetition is applied compare with example 14, while keeping other process parameters unchanged. In example 15 crazing probability increases to 60%.

It is critical to pick the correct light filter to ensure curing. To cure the hard coating material, enough spectrum overlap is required between the absorption of the coating material/spectacle lens and emission of the intense light source. This overlap determines the amount of absorbed energy by coating material/spectacle lens, hence it results in generation of heat and subsequently thermally curing of hard coating material.
- CR39-primer-low index hard coating: example 7 uses UV filter of 425 nm and example 5 uses UV filter of 350 nm. The other process parameters remain the same. The overlap between the absorption of coating/spectacle lens and emission of 425-1000 nm is smaller than emission of 350-1000 nm. Hence, the overall absorbed energy on coating material/spectacle lens is lower while using filter of 425 nm vs filter of 350 nm and as a result the curing level is lower. The lower curing level result in lower Bayer ratio and indentation hardness of example 7 vs example 5. Moreover, the adhesion showed failure while using filter of 425 nm.

As discussed in detail above, the reason of higher Bayer ratio is due to increasing the curing density of the hard coating by applying more radiant energy to the coating/spectacle lens. Tint uptake (dye uptake) is one common way to compare the curing density of coatings. The difference between transmittance level before and after tint uptake (dye diffusion), is a sign of the level of curing density. The higher tint uptake, the lower curing density of the hard coating (bigger 3D network spacing for dyes to diffuse).

Table 3 below shows the tint uptake for different examples. All these samples were treated the same during the tint uptake process (same tinting solution and same uptake time).

**Table 3:**

| **Example / Comparative example** | **Bayer ratio** | **Transmittance Before Tint (%)** | **Transmittance After Tint (%)** | **Tint uptake (%)** |
|---|---|---|---|---|
| Uncoated spectacle lens (CR39) | 1 | 91.6 | 31.7 | 59.9 |
| Comparative example 1 | 7.5 | 91.1 | 88.8 | 2.3 |
| Comparative example 2 | 4 | 91.5 | 85.8 | 5.7 |
| Example 5 | 8 | 91.1 | 89.6 | 1.5 |

Uncoated spectacle lens uptake much more dyes due to lack of hard coatings. Hard coating in this case is a 3D packed networked polysiloxane resins, which reduces the tint uptake diffusion kinetic. The spectacle lens after hard coating shows much less tint uptake versus uncoated spectacle lenses. Comparative example 2 results in higher tint uptake in comparison with comparative example 1 (oven cured). This is a sign of lower curing density which is in accordance with lower abrasion resistance properties (lower Bayer ratio) of comparative example 2 vs comparative example 1.

Example 5 results in comparable (slightly lower) tint uptake in comparison with comparative example 1 (oven cured) and lower tint uptake in comparison with comparative example 2. This is due to comparable curing density of example 5 vs comparative example 1 and higher curing density of example 5 vs comparative example 2, which is in accordance with the differences in Bayer ratios. Please note that all the samples were tinted in same tint solution and same dipping time.

Therefore, combination of correct emission light spectrum and high mass/reflectance curing plate during photonic curing process, the curing time of hard coating on spectacle lenses significantly reduced (1800-3600 s vs 15 s per hard coated spectacle lens) while keeping product performance the same as long time oven cured examples (no yellowing, no crazing, same curing level, same mechanical/abrasion/adhesion properties).

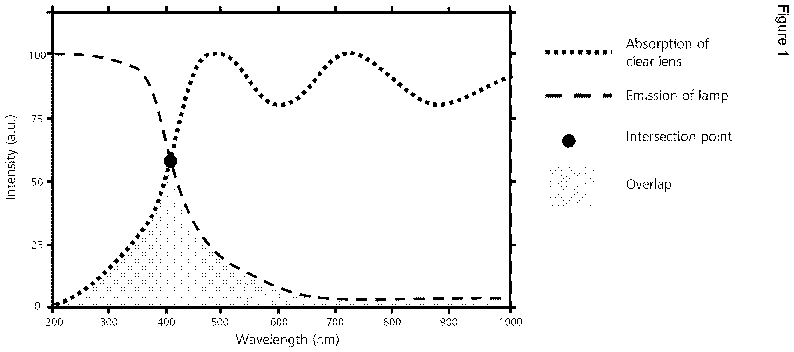

## Claims

1. Method for manufacturing a spectacle lens, comprising the step of
- curing, within a total curing time ranging from 1 ms to 3 min, a coating material on a surface of a spectacle lens using optical radiation emitted by an intense light source, said coating material resulting in a coating on said surface of said spectacle lens,
the method being **characterized in** excluding a wavelength range of said optical radiation emitted by said intense light source, the excluded wavelength range being one wavelength range selected from:
i) a wavelength range of from a) a wavelength at an intersection point of an emission spectrum of said intense light source and an absorptance spectrum of the spectacle lens to b) a minimum wavelength of said optical radiation emitted by said intense light source,
ii) a wavelength range of from a) a wavelength having a value that is 1% to 35% larger than a wavelength at an intersection point of an emission spectrum of said intense light source and an absorptance spectrum of the spectacle lens to b) a minimum wavelength of said optical radiation emitted by said intense light source,
iii) a wavelength range of from a) a wavelength having a value that is 1% to 25% smaller than a wavelength at an intersection point of an emission spectrum of said intense light source and an absorptance spectrum of the spectacle lens to b) a minimum wavelength of said optical radiation emitted by said intense light source,
for i) to iii) the emission spectrum of the intense light source is normalized to a maximum value of emission spectrum
and the absorptance spectrum of the spectacle lens is a spectrum of an absorptance of the spectacle lens as a function of wavelengths.

2. Method according to claim 1, **characterized in that** said wavelength having said value that is 1% to 35% larger than said wavelength at said intersection point of said emission spectrum of said intense light source and said absorptance spectrum of said spectacle lens is any wavelength in a wavelength range between
a) the wavelength at the intersection point of the emission spectrum of the intense light source and the absorptance spectrum of the spectacle lens, excluding the wavelength at said intersection point, and
b1) a smallest wavelength at which the absorptance of the spectacle lens is equal to 2% or 0.02, including said smallest wavelength, or
b2) a wavelength that is at least one of
- 10% to 30% larger than said wavelength at the intersection point of the emission spectrum of the intense light source and the absorptance spectrum of the spectacle lens, including a respective wavelength,
- 12% to 25% larger than said wavelength at the intersection point of the emission spectrum of the intense light source and the absorptance spectrum of the spectacle lens, including a respective wavelength,
- 14% to 20% larger than said wavelength at the intersection point of the emission spectrum of the intense light source and the absorptance spectrum of the spectacle lens, including a respective wavelength.

3. Method according to any one of claims 1 and 2, **characterized in that** said wavelength having the value that is 25% smaller than said wavelength at said intersection point of said emission spectrum of said intense light source and said absorptance spectrum of said spectacle lens is any wavelength in a wavelength range between
a) the wavelength at the intersection point of the emission spectrum of the intense light source and the absorptance spectrum of the spectacle lens, excluding the wavelength at said intersection point, and
b1) a cut-off wavelength of the spectacle lens, including said cut-off wavelength, in case said cut-off wavelength is smaller than said wavelength at said intersection point, or
b2) a maximum wavelength of ultraviolet radiation, including a respective maximum wavelength of ultraviolet radiation.

4. Method according to any one of claims 1 to 3, **characterized in that** said wavelength larger than said wavelength at said intersection point of said emission spectrum of said intense light source and said absorptance spectrum of said spectacle lens or said wavelength smaller than said wavelength at said intersection point of said emission spectrum of said intense light source and said absorptance spectrum of said spectacle lens each is selected such that a radiant flux emitted by said intense light source is sufficient to cure said coating material on said surface of said spectacle lens within said total curing time.

5. Method according to claim 4, **characterized in that** said radiant flux is applied with an irradiance I in one of the following ranges:
- a range of 1000 mW/cm² ≤ I ≤ 40000 mW/cm²,
- a range of 10000 mW/cm² ≤ I ≤ 40000 mW/cm²,
- a range of 20000 mW/cm² ≤ I ≤ 40000 mW/cm².

6. Method according to any one of claims 1 to 5, **characterized in that** the excluded wavelength range is selected such that an overlap in form of a wavelength range between the emission spectrum of the intense light source and the absorptance spectrum of the spectacle lens ensures the spectacle lens to absorb larger than or equal to 2.0% of optical radiation emitted by the intense light source.

7. Method according to claim 6, **characterized in that** said overlap is in one of the following ranges:
- a range from 3% to 90%, a range from 5% to 60%, a range from 7% to 30%, a range from 8% to 15%, in case of a clear spectacle lens, the clear spectacle lens as defined in ISO 13666:2019(E), entry 3.5.7,
- a range from 12% to 90%, a range from 13% to 75%, a range from 14% to 60%, a range from 15% to 45%, in case of a tinted spectacle lens, the tinted spectacle lens as defined in ISO 13666:2019(E), entry 3.5.6,
- a range from 12% to 90%, a range from 14% to 70%, a range from 16% to 50%, a range from 19% to 35%, in case of a photochromic spectacle lens, the photochromic spectacle lens as defined in ISO 13666:2019(E), entry 3.5.11.

8. Method according to any one of claims 1 to 7, **characterized in that** a temperature on the surface of the spectacle lens or a temperature of the spectacle lens does not exceed a temperature of 170°C.

9. Method according to claim 8, **characterized in that** for ensuring said temperature on said surface of the spectacle lens or said temperature of said spectacle lens an average reflectance R of said curing plate carrying said spectacle lens is in one of the following ranges:
- a range of ≥ 5% to R ≥70%,
- a range of ≥ 35% to R ≥70%.

10. Method according to claim 9, **characterized in that** a temperature at a contact point between the spectacle lens and a curing plate carrying said spectacle lens does not exceed a temperature of 250°C.

11. Method being implemented by a processor and being configured for generating curing process parameters, said curing process parameters being configured for the purpose of a use for curing a coating material on a surface of a spectacle lens, said coating material being curable by radiant energy emitted by an intense light source, the method being **characterized in** the step of:
- Determining a wavelength range of optical radiation between a minimum wavelength emitted by said intense light source and an intersection point between an emission spectrum of the intense light source and an absorptance spectrum of the spectacle lens, the emission spectrum of the intense light source being normalized to a maximum value of the emission spectrum and the absorptance spectrum of the spectacle lens being the absorptance of the spectacle lens as a function of wavelengths.

12. Computer program comprising instructions which, when the program is executed by a computer, cause the computer to carry out the method of claim 11.

13. Computer-readable storage medium having stored thereon the computer program of claim 12.

14. Data signal carrying the computer program of claim 13.
